# FASCICULE DE BREVET EUROPEEN

(11) **EP 2 856 122 B1**
(45) Date de publication et mention de la délivrance du brevet: **01.06.2016**
(21) Numéro de dépôt: 13731365.6
(22) Date de dépôt: 28.05.2013
(51) Int. Cl.: G01N 21/88, G01N 21/93, G01N 21/958, G06T 7/00, G01N 21/90

(54) **PROCEDE OPTIQUE D'INSPECTION DE RECIPIENTS TRANSPARENTS OU TRANSLUCIDES PORTANT DES MOTIFS VISUELS**
OPTISCHES VERFAHREN ZUR ÜBERPRÜFUNG TRANSPARENTER ODER DURCHSICHTIGER BEHÄLTER MIT VISUELLEN MOTIVEN
OPTICAL METHOD FOR INSPECTING TRANSPARENT OR TRANSLUCENT CONTAINERS BEARING VISUAL MOTIFS

(30) Priorité: 28.05.2012 FR 1254903
(43) Date de publication de la demande: 08.04.2015
(73) Titulaire: MSC&SGCC, 69390 Vourles (FR)
(72) Inventeur: ROMAN, Sébastien, F-42480 La Fouillouse (FR); PLOTON, Nicolas, F-69009 Lyon (FR)
(74) Mandataire: Thibault, Jean-Marc
(86) Numéro de dépôt international: PCT/FR2013/051178
(87) Numéro de publication internationale: WO 2013/178928

(56) Documents cités:
- EP-A1- 1 560 018
- EP-A1- 1 916 515
- WO-A1-97/06429
- FR-A1- 2 916 048
- FR-A1- 2 939 201
- US-A- 6 025 910
- US-A1- 2005 069 191
- US-A1- 2005 259 868

## Description

La présente invention concerne le domaine technique du contrôle optique des récipients translucides ou transparents en vue de détecter d'éventuels défauts absorbants et/ou réfractants et/ou réfléchissants la lumière présentés par de tels récipients.

L'objet de l'invention trouve une application particulièrement avantageuse pour la détection de défauts sur des récipients en verre ou en matière plastique comportant des motifs visuels au sens général, tels que des décors, des blasons, des ergots ou des encoches de positionnement, des marques d'identification ou d'authentification telles que les numéros de moule ou une marque du fabricant, etc.

Il est connu d'inspecter de manière automatique et sur la ligne de production, des récipients défilant à haute cadence devant un poste de contrôle optique comportant un système de vision comprenant une source de lumière située d'un côté du récipient et une caméra située de l'autre côté du récipient. La caméra réalise une image grâce à la lumière traversant les récipients. Ce principe d'éclairage est dit par transmission. Bien entendu, plusieurs postes de contrôle sont nécessaires pour contrôler la totalité des récipients. Ainsi, il est connu de mettre en oeuvre un équipement comprenant six à vingt-quatre caméras pour inspecter les parois verticales des récipients. Pour contrôler les fonds des récipients, il est prévu un autre système de vision dont la caméra est située au-dessus du récipient et la source de lumière en-dessous du fond du récipient. Une image du fond du récipient est faite à travers le goulot du récipient. D'autres systèmes optiques sont utilisés, avec de la lumière structurée ou non, colimatée ou non, polarisée ou non, etc.

D'autres dispositifs complémentaires peuvent être mis en oeuvre pour la détection de défauts réfléchissant la lumière, comme par exemple des glaçures. Ces dispositifs optiques ont tous en commun une étape d'obtention d'au moins une image de chaque récipient à inspecter.

D'une manière générale, les images des récipients sont analysées par des systèmes de traitement électroniques consistant à numériser les images, puis à les analyser à l'aide de calculateurs en vue de déterminer la présence de défauts dans les récipients.

Pour déceler des défauts sur des récipients, il est connu dans l'état de la technique tel que décrit par exemple dans la demande de brevet EP 1 560 018, de réaliser un masque numérique et de comparer les images prises avec le masque numérique. Dans le cas précis de ce brevet, les récipients sont mis en rotation autour de leur axe de symétrie et une série d'images est prise. L'inconvénient de l'utilisation de masques numériques dans ce système d'inspection avec rotation apparaît lors de la nécessité de gérer plusieurs masques numériques différents pour permettre de prendre en compte des particularités comme des motifs sur les récipients qui se présenteront au moment des prises de vue, dans différentes positions durant la rotation de l'article autour de son axe.

Conformément à ce document, il faut considérer qu'un masque numérique est une image, c'est-à-dire un tableau de valeurs ou pixels, superposable à une image à traiter, et dont les valeurs modifient la façon de traiter les pixels de l'image à traiter. Par exemple, les valeurs des pixels du masque numérique sont utilisées comme une carte de seuils locaux auxquels sont comparés les pixels de l'image à traiter. Cependant, les valeurs du masque numérique peuvent également définir une taille de filtre, un gain etc. à appliquer en tout pixel de l'image à traiter.

Il est également connu par l'article publié dans « Glass worldwide, issue thirty three 2011 page 32, quality control solutions for cosmetics », une méthode d'analyse d'images de récipients dans laquelle un masque numérique est construit par apprentissage sur la production et permet de prendre en compte différents effets récurrents des bouteilles, comme par exemple des ombres sur les bords des articles.

En raison de l'orientation aléatoire des récipients portant des motifs, au moment de la prise de vue, cette technique ne peut pas s'appliquer dans la zone de présence possible d'un motif, car l'apprentissage conduit à réduire totalement la sensibilité de détection dans cette région.

En effet, il est connu de localiser certains types de motifs dans les images de récipients et d'appliquer des traitements d'image en dehors de ces motifs, afin de ne pas considérer lesdits motifs comme des défauts. Mais dans ce cas, les motifs eux-mêmes ne sont pas analysés, même si ils contiennent des défauts. Cela revient à positionner des zones « sans traitement » sur les motifs.

Lorsque lesdits motifs sont des gravures du verre, ce qui est le cas lors de l'inspection des récipients en verre immédiatement après leur fabrication, ils ont de plus une variabilité de contraste assez importante ne permettant pas de les considérer comme des simples formes géométrique binaires.

La détection de défauts est donc particulièrement délicate pour des récipients présentant des motifs visuels tels que des blasons ou des marques d'identification ou de repérage par exemple. En effet, le traitement d'images doit prendre en compte la présence de tels motifs visuels pour les images prises. De plus, il apparaît une difficulté majeure à déceler un défaut positionné dans le motif visuel du récipient.

Dans l'état de la technique, il est connu aussi par la demande de brevet WO 97/06429 un procédé optique pour détecter des défauts au niveau du filetage des récipients visant à réaliser une multitude d'images des récipients et à définir des zones de traitement déterminées pour détecter des défauts. Pour chaque zone de traitement, tous les pixels de la zone sont comparés à une valeur de seuil. Cette valeur de seuil est calculée uniquement sur la base d'une statistique globale de chaque zone. Cette technique ne permet pas d'analyser avec finesse des images complexes et de détecter des défauts dans des récipients présentant des motifs visuels tels que des blasons ou des marques d'identification ou de repérage, par exemple.

Le document US 2005/259868 décrit une méthode optique d'inspection d'objets consistant à réaliser une série d'images de l'objet et de comparer au moins une image de la série acquise avec une image prise dans une série d'images préenregistrées. Ce document enseigne d'opérer comme opération géométrique, une translation et/ou rotation d'images avant la comparaison des images entre elles. Une telle méthode n'est pas adaptée à contrôler des motifs en reliefs portés par des objets transparents, qui sont variables et dont l'image varie également énormément en fonction des positions relatives de l'objet et des dispositifs d'éclairage et d'observation en raison de la réfraction n'intervenant pas dans le type d'objet observé selon cette méthode.

La présente invention vise à remédier aux inconvénients de l'art antérieur en proposant un nouveau procédé optique d'inspection de récipients transparents ou translucides pourvus de motifs visuels, conçu pour détecter en particulier des défauts dans les zones des récipients comportant de tels motifs visuels, cette inspection pouvant être menée à bien quelle que soit la position des motifs visuels dans les images prises.

Pour atteindre un tel objectif, le procédé optique vise à inspecter à l'aide d'un système de vision, des récipients en matériau transparent ou translucide selon l'invention comportant au moins un motif visuel.

Selon l'invention le procédé, consiste :
- à illuminer les récipients défilant devant le système de vision,
- à réaliser au moins une image de chaque récipient, défilant devant le système de vision, chaque image possédant un nombre de pixels déterminé avec chacun un niveau d'intensité,
- à déterminer dans l'image de chaque récipient, au moins une zone de traitement comprenant au moins un motif visuel à inspecter, et au moins une zone de recherche dans laquelle apparaît au moins un motif visuel de repérage,

- à réaliser un masque numérique pour au moins la zone de traitement des images,
- déterminer la position et l'orientation du motif visuel de repérage dans ladite zone de recherche de l'image du récipient,
- appliquer au masque numérique ou à la zone de traitement, une transformation géométrique, fonction de la position et l'orientation du motif visuel de repérage, de manière à pouvoir placer, lors de l'étape de traitement, le masque et la zone de traitement dans une position de coïncidence,
- appliquer à chaque pixel de la zone de traitement, un traitement d'images dépendant de la valeur d'intensité du pixel coïncidant du masque numérique, afin de déceler la présence d'un défaut du récipient,
- mettre à jour le masque numérique, en :
   ▪ prenant en compte au moins une image de récipients,
   ▪ choisissant de modifier ou non le masque numérique en fonction de ladite image, la modification du masque consistant à :
      * déterminer la position et l'orientation du motif visuel à inspecter dans la zone de traitement des images,
      * appliquer à la zone de traitement de l'image ou au masque une transformation géométrique de manière à pouvoir placer, le masque et la zone de traitement dans une position de coïncidence,
      * assurer la fusion d'au moins la zone de traitement de l'image et du masque pour mettre à jour le masque numérique.

De plus, le procédé selon l'invention peut présenter en outre en combinaison au moins l'une et/ou l'autre des caractéristiques additionnelles suivantes :
- réaliser le masque numérique dans une étape d'initialisation, à partir d'au moins une image d'un récipient,
- appliquer à chaque pixel de la zone de traitement, un traitement d'images tel que chaque pixel de la zone de traitement est comparé au pixel coïncidant du masque numérique,
- analyser l'image afin de détecter des défauts dans le motif visuel,
- appliquer en tant que transformation géométrique, une translation et/ou une rotation et/ou une anamorphose,
- réaliser une étape de filtrage des images prises des récipients, préalablement à l'étape de traitement et à prendre en compte dans l'étape de mise à jour du masque, des images sur lesquelles est appliquée ladite étape de filtrage.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique d'un système de vision adapté pour inspecter en particulier le fond de récipients pourvu d'au moins un motif visuel.
La **Figure 1A** est un exemple d'image d'un fond de récipient sur lequel apparaît un motif visuel.
La **Figure 2** est une vue schématique d'un système de vision adapté pour inspecter en particulier la paroi d'un récipient pourvu d'au moins un motif visuel.
La **Figure 2A** est un exemple d'image d'un récipient pourvu d'un motif visuel sur sa paroi.
La **Figure 2B** illustre une série d'images anamorphosées concaténées et prises du récipient illustré à la **Fig. 2A** défilant devant le système de vision.
La **Figure 3** est un organigramme simplifié du procédé conforme à l'invention.

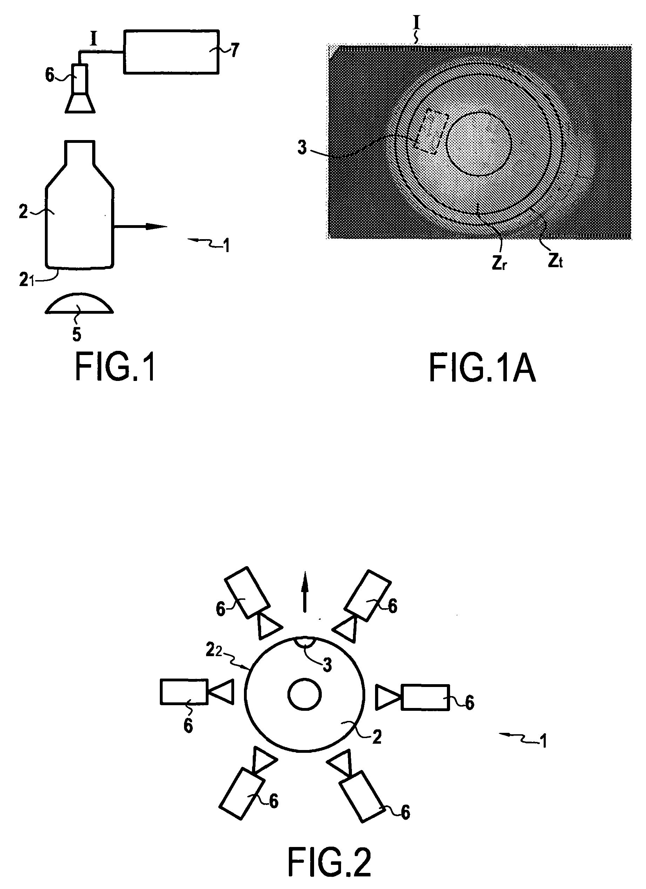

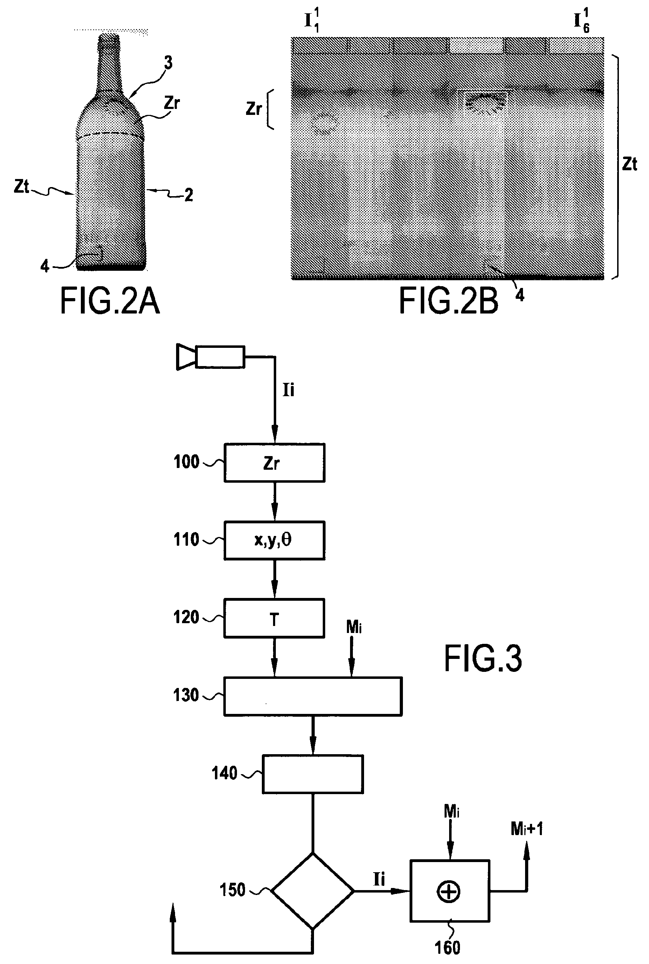

Tel que cela ressort des **Fig. 1** et **2**, l'objet de l'invention vise à inspecter à l'aide d'un système de vision **1,** des récipients **2** en matériau transparent ou translucide, tels que des bouteilles, des pots ou des flacons en verre munis d'au moins un motif visuel **3** tel qu'un décor, un blason, un ergot ou une encoche de positionnement, une marque d'identification ou d'authentification telle qu'un numéro de moule. Un tel motif visuel peut être obtenu en particulier par moulage, gravure ou impression.

L'invention vise à contrôler les récipients afin de détecter des défauts situés en particulier dans les zones des récipients dans lesquelles au moins un motif visuel **3** est présent. Le procédé d'inspection vise plus précisément à inspecter des récipients dont la manutention n'est pas garantie c'est-à-dire pour laquelle la position et l'orientation des récipients **2** par rapport au système de vision **1** est susceptible d'être différente d'un récipient à l'autre. Les récipients **2** sont en général de forme de révolution autour d'un axe vertical, et se présentent, devant le poste d'inspection, orientés de manière aléatoire autour de leur axe de révolution.

De manière classique, le système de vision **1** est adapté pour prendre une ou plusieurs images de chaque récipient **2** défilant successivement à haute cadence devant le système de vision. Bien entendu, le système de vision **1** est adapté ou configuré pour prendre des images des récipients **2** dans chacune desquelles est définie au moins une zone de traitement **Zt** dans laquelle apparaît au moins un motif visuel **3** sélectionné appelé aussi motif visuel à inspecter. La zone de traitement **Zt** correspond à la zone inspectée du récipient en vue de déterminer la conformité ou non de ce dernier. Cette zone de traitement **Zt** qui comporte au moins un motif visuel **3** sélectionné, est limitée à la région couverte par ce motif visuel **3** ou couvre une surface plus grande que celle occupée par le motif visuel **3.** La définition d'une zone de traitement a pour objet de permettre l'inspection à l'intérieur du motif visuel **3** et/ou à proximité dudit motif visuel.

Les **Fig. 1** et **1A** illustrent un exemple de réalisation pour lequel le système de vision **1** est adapté pour inspecter les fonds **2₁** des récipients **2** dans lesquels se trouve au moins un motif visuel **3.** Selon cet exemple, le système de vision **1** comporte une source de lumière **5** située en dessous du fond **2₁** du récipient **2** et une caméra **6** munie de son objectif, positionnée au-dessus du récipient **2.** La caméra **6** est reliée à une unité **7** d'acquisition et de traitement des images **I** prises par la caméra pour chaque récipient **2.** La **Fig. 1A** est un exemple d'une image **I** du fond d'un récipient à inspecter dans laquelle est définie au moins une zone de traitement **Zt** comportant au moins le motif visuel **3** sélectionné à inspecter, à savoir une marque de fabricant ou une indication de contenance.

Les **Fig. 2A** à **2B** illustrent un autre exemple de réalisation pour lequel le système de vision **1** est adapté pour inspecter les parois **2₂** des récipients **2.** Selon cet exemple, la zone de traitement **Zt** concerne une partie de la paroi dans laquelle apparaît en tant que motif visuel **3** à inspecter, un blason. Selon cet exemple, le système de vision **1** comporte au moins une source d'éclairage non représentée et une série (au nombre de six dans l'exemple illustré) de caméras **6** munies de leur objectif réparties angulairement de manière que les images prises par les différentes caméras **6** couvrent toute la périphérie des récipients **2** défilant devant le poste de vision **1.** Avantageusement, les caméras **6** sont disposées de manière que les images prises par deux caméras voisines recouvrent une même zone du récipient pour permettre une inspection à coup sûr de la totalité de la circonférence du récipient **2.** La **Fig. 2B** illustre un exemple de six imagettes **I¹₁, I¹₂, I¹₃... I¹₆** pour un même récipient dans certaines desquelles apparaît le motif visuel **3** à inspecter à savoir le blason.

Bien entendu, le système de vision **1** peut être réalisé de toute manière appropriée, différente des exemples décrits. Quelle que soit sa réalisation, le système de vision **1** est apte, pour chaque récipient **2** défilant successivement devant le système de vision, à illuminer le récipient et à prendre au moins une image **Iᵢ** du récipient. Chaque image **Iᵢ** prise possède un nombre de pixels déterminé, avec chacun un niveau d'intensité donné.

Le procédé d'inspection selon l'invention consiste ainsi à sélectionner au moins une zone de traitement **Zt** comportant au moins un motif visuel **3** à inspecter, sur une série de récipients **2** amenés à défiler successivement devant le poste de vision **1.**

De manière complémentaire, le procédé selon l'invention consiste comme illustré à la **Fig. 3****,** dans une étape 100 à sélectionner un motif visuel **3** dit de repérage et à considérer dans les images prises **Iᵢ**, au moins une zone de recherche **Zr** dans laquelle apparaît au moins le motif visuel **3** sélectionné dit de repérage. Il est à noter que le motif visuel **3** de repérage et situé dans la zone de recherche **Zr** peut correspondre ou non au motif visuel **3** à inspecter présent dans la zone de traitement **Zt.** Dans l'exemple illustré à la **Fig. 2A****,** la zone de recherche **Zr** correspond à une zone de hauteur limitée des images correspondant sensiblement à l'épaule des récipients et dans laquelle est positionné en tant que motif visuel **3,** le blason qui fait partie également de la zone de traitement **Zt.** Bien entendu, comme indiqué ci-dessus, le motif visuel **3** de repérage et situé dans la zone de recherche **Zr** peut ne pas correspondre au motif visuel **3** à inspecter présent dans la zone de traitement **Zt.** Ainsi par exemple, il peut être prévu que la zone de traitement comporte en tant que motif visuel à inspecter, le blason tandis que la zone de recherche comporte en tant que motif visuel **3** de repérage, l'encoche de positionnement **4.** Selon une variante préférée de réalisation, la zone de recherche **Zr** et la zone de traitement **Zt** comporte un motif visuel **3** commun, c'est-à-dire que le motif visuel à inspecter correspond au motif visuel de repérage.

Le procédé selon l'invention consiste dans une étape 110, à localiser le motif visuel **3** sélectionné (de repérage) dans la zone de recherche **Zr.** En d'autres termes, cette étape de localisation consiste à déterminer la position et l'orientation du motif visuel **3** de repérage dans l'image **Iᵢ.** Il doit être compris que cette étape permet de connaître dans un même référentiel, les coordonnées **x, y** et l'orientation θ des motifs visuels **3** apparaissant dans les différentes images **Iᵢ** des récipients **2.** En effet, la position des motifs visuels **3** dans les images **Iᵢ** est à même de varier dans la mesure où les récipients **2** occupent des positions et/ou des orientations différentes lors de leur acheminement au système de vision **1** et en particulier, lors de la prise des images.

De manière plus précise, cette étape de localisation consiste dans une phase d'apprentissage, à enregistrer les caractéristiques de morphologie et/ou de texture et/ou de photométrie du motif visuel **3** sélectionné (de repérage). Pour localiser le motif visuel sélectionné (de repérage), le procédé consiste à rechercher, par toute méthode de recherche classique (mise en correspondance de modèles « pattern matching » par exemple), de telles caractéristiques présentes dans la zone de recherche **Zr.**

Cette étape de localisation 110 intervient pour permettre d'appliquer correctement aux images prises Iᵢ, un masque numérique **Mi**, lors d'une étape de traitement 130. Ainsi, le procédé selon l'invention consiste à utiliser un masque numérique **Mi** pour au moins une zone de traitement **Zt** des images comportant au moins le motif visuel **3** à inspecter. Cette zone de traitement **Zt** correspond à la zone de recherche **Zr** ou à une partie seulement de la zone de recherche **Zr** ou englobe complétement la zone de recherche en s'étendant en dehors de ladite zone de recherche. Ce masque numérique **Mi** comporte ainsi un nombre de pixels déterminé, avec chacun un niveau d'intensité (de gris) déterminé s'établissant selon cette zone de traitement **Zt.** La réalisation de ce masque numérique **Mi** sera décrite plus en détail dans la suite de la description.

Le procédé selon l'invention consiste dans une étape 120, à appliquer une transformation géométrique **T** de manière que lors de l'étape de traitement 130, le masque numérique **Mi** et la zone de traitement **Zt** des images se trouvent placés dans une position de coïncidence. Il doit être compris que la transformation géométrique **T** appliquée résulte ou dépend du résultat de la localisation du motif visuel **3** (de repérage) obtenue lors de l'étape 110.

Dans l'exemple illustré à la **Fig.3**, la transformation géométrique **T** est appliquée aux images **Iᵢ.** Il peut être envisagé un mode de réalisation dans lequel la transformation géométrique **T** est appliquée au masque numérique **Mi** et non aux images **Iᵢ.** Cette étape de transformation géométrique **T** permet de placer en position de coïncidence ou de superposition, les pixels du masque numérique **Mi** avec les pixels de la zone de traitement **Zt** des images **Iᵢ**. Ainsi, d'une manière générale, les pixels **m** du masque numérique **Mi** et les pixels **p** de la zone de traitement **Zt** sont placés dans un même référentiel **X, Y** de sorte que les coordonnées des pixels peuvent s'écrire respectivement **m (x, y)** pour le masque numérique **Mi** et **p (x, y)** pour la zone de traitement **Zt.** Des exemples de réalisation de cette transformation géométrique **T** seront donnés dans la suite de la description.

Le procédé selon l'invention consiste lors de l'étape de traitement 130, à appliquer à chaque pixel de la zone de traitement **Zt** des images **Iᵢ**, un traitement d'images dépendant de la valeur d'intensité du pixel coïncident du masque numérique **Mi**. Il doit être considéré que le traitement d'images est réalisé pour chaque pixel **p (x, y)** de la zone de traitement **Zt** de l'image, en prenant en compte le pixel homologue ou coïncident **m (x, y)** du masque numérique **Mi.**

En tant que traitement d'images, il peut être réalisé au moins une étape de comparaison des pixels **p (x, y)** de l'image et des pixels **m (x, y)** du masque numérique **Mi,** ou encore les opérations de traitement suivantes :
- p (x, y) - m (x, y)
- p (x, y) / m (x, y)
- a * p (x, y) + b * m (x, y), avec a et b des coefficients.

Le procédé selon l'invention consiste dans une étape 140, à analyser les résultats de l'étape de traitement de manière à déterminer si le récipient présente un défaut en particulier au niveau de la zone de traitement **Zt.**

Le procédé selon l'invention consiste dans une étape 150, à déterminer ou choisir de mettre à jour ou non le masque numérique **Mi.** Dans une étape 160, le procédé selon l'invention consiste à mettre à jour le masque numérique **Mi** en fonction des niveaux d'intensité des pixels de la zone de traitement **Zt.** Cette étape 160 de mise à jour permet grâce à des règles statistiques ou mathématiques par exemple, de faire évoluer plus ou moins le masque numérique **Mi.**

Le choix (étape 150) de modifier le masque numérique **Mi** peut dépendre de différents facteurs tels que de limage considérée, de l'état de la production des récipients en cours qualifiée par exemple, par une analyse statistique, des exigences de contrôle qualité plus ou moins sévères. Selon une première variante simplifiée de l'invention, toutes les images contribuent en permanence, pour chaque récipient contrôlé, à l'évolution du masque numérique. Selon une autre variante de réalisation, le masque numérique **Mi** évolue uniquement pendant une durée limitée correspondant au début de la production des récipients. Selon une autre variante de réalisation, le masque numérique **Mi** est mis à jour en prenant en compte uniquement les images des récipients jugées sans défaut. Selon ce dernier exemple de réalisation, le masque numérique **Mi** est modifié en Mi + 1 lorsque l'étape d'analyse conduit à une absence de défaut du récipient **2.** Dans ce cas, le masque numérique **Mi** est modifié afin d'intégrer pixel par pixel, au moins une partie de la valeur d'intensité des pixels de la zone de traitement **Zt.** L'avantage de réaliser le masque numérique à l'aide de la fusion d'un nombre important d'images (plusieurs dizaines) et donc de récipients, permet d'apprendre automatiquement une image moyenne des récipients pouvant être considérée comme une image d'un récipient sans défaut et de créer automatiquement une sensibilité de détection variable localement.

Le procédé selon l'invention consiste à renouveler les étapes de traitement décrites ci-dessous pour le prochain récipient **2,** avec un masque numérique éventuellement modifié Mi + 1.

Le procédé selon l'invention met ainsi en place un principe de détection de défauts reposant sur un cumul glissant d'images prétraitées comparé à l'image du récipient en cours d'inspection. Ce principe de détection permet de soustraire les informations répétitives (ombres ou motifs) et ainsi d'obtenir une meilleure sensibilité de mesure dans les zones de traitement perturbées par la présence des motifs visuels, voire même d'utiliser les mêmes critères de détection pour l'ensemble de la zone de traitement y compris pour les divers motifs visuels.

Le procédé selon l'invention consiste ainsi à réaliser un masque numérique **Mi** :
- en prenant en compte au moins une image du récipient **2,**
- en déterminant la position et l'orientation du motif visuel **3** (de repérage) dans la zone de recherche **Zr** d'au moins ladite image,
- en appliquant une transformation géométrique, fonction de la position et l'orientation du motif visuel **3** de repérage, soit à la zone de traitement **Zt** de ladite image, soit au masque de manière à placer la zone de traitement **Zt** et le masque numérique en position de coïncidence,
- en assurant la fusion d'au moins la zone de traitement de l'image et du masque numérique pour mettre à jour le masque numérique **Mi.**

Il ressort de ce qui précède que le masque numérique **Mi** est réalisé par la fusion des zones de traitement **Zt** d'images. D'une manière générale, la fusion d'une image avec le masque numérique consiste à modifier les valeurs des pixels coïncidants du masque numérique. Cette modification peut se faire selon différentes manières comme par exemple une combinaison linéaire systématique ou conditionnelle des valeurs d'un pixel du masque numérique et d'un pixel de l'image, avec ou sans seuil, en prenant en compte des pixels ou groupe de pixels voisins.

Selon une variante de réalisation, le procédé consiste à réaliser le masque numérique dans une étape d'initialisation, à partir d'au moins une image d'un récipient qui par exemple, ne comporte pas de défaut.

Il ressort de la description qui précède, que les aléas d'orientation et de positionnement des récipients **2** sont corrigés pour permettre une mise en coïncidence stricte des pixels des images avec le masque numérique. Cette transformation géométrique peut être réalisée de différentes manières.

Lorsque la prise des images **Iᵢ** est réalisée sur le fond **2₁** du récipient **2 (****Fig. 1** et **1A****)**, il peut être réalisé un redressement d'images comme transformation géométrique sur l'image, à partir de la détermination de l'angle de rotation et de la translation du motif visuel **3** par rapport à une position d'origine ou un repère fixe.

Lorsque la prise des images **Iᵢ** est réalisée sur les parois du récipient par une série de caméras **6 (****Fig. 2****,** **2A, 2B****)**, la transformation géométrique sur les images met en oeuvre au moins un traitement d'anamorphose. En effet, compte tenu de la forme de révolution du récipient **2**, chaque caméra **6** réalise une anamorphose de l'image de sorte que toutes les prises de vues possèdent le même référentiel de traitement. Les calculs d'anamorphose permettent d'obtenir une représentation plane de la paroi du récipient généralement cylindrique. Le procédé assure une concaténation des prises de vues obtenues ou des imagettes anamorphosées permettant une représentation en déroulé de la paroi complète du récipient **(****Fig. 2B****).** La concaténation des imagettes anamorphosées permet ensuite de réaliser, dans l'une la localisation du motif visuel **3.**

Selon une caractéristique avantageuse de réalisation, le procédé consiste à réaliser une étape de filtrage des images prises des récipients, préalablement à l'étape de traitement. Ainsi, afin d'améliorer la qualité des images prises, il peut être prévu de corriger l'histogramme, de réduire le bruit au moyen de filtres passe-bas ou de renforcer le contraste local des défauts dans les images par des filtres de type passe-haut. Un tel filtrage peut être réalisé avant ou après l'étape de la transformation géométrique.

Cette étape de filtrage est appliquée sur les images prises en compte lors de la mise à jour du masque numérique.

L'invention n'est pas limitée aux exemples décrits et représentés car diverses modifications peuvent y être apportées sans sortir de son cadre. L'invention s'applique également à l'analyse d'images infrarouges obtenues directement à partir du rayonnement de bouteilles chaudes.

## Revendications

1. Procédé optique pour inspecter à l'aide d'un système de vision **(1),** des récipients **(2)** en matériau transparent ou translucide, comportant au moins un motif visuel **(3), caractérisé en ce qu'**il consiste :
- à illuminer les récipients **(2)** défilant successivement devant le système de vision **(1),**
- à réaliser au moins une image (**Iᵢ**) de chaque récipient **(2),** défilant devant le système de vision **(1),** chaque image possédant un nombre de pixels déterminé avec chacun un niveau d'intensité,
- à déterminer dans l'image de chaque (2) récipient, au moins une zone de traitement **(Zt)** comprenant au moins un motif visuel à inspecter, et au moins une zone de recherche **(Zr)** dans laquelle apparaît au moins un motif visuel **(3)** de repérage,
- à réaliser un masque numérique **(Mi)** pour au moins la zone de traitement **(Zt)** des images,
- déterminer la position et l'orientation du motif visuel **(3)** de repérage dans ladite zone de recherche **(Zr)** de l'image du récipient,
- appliquer au masque numérique (**Mi**) ou à la zone de traitement (**Zt**), une transformation géométrique, fonction de la position et l'orientation du motif visuel **(3)** de repérage, de manière à pouvoir placer, lors de l'étape de traitement, le masque (**Mi**) et la zone de traitement **(Zt)** dans une position de coïncidence,
- appliquer à chaque pixel de la zone de traitement **(Zt),** un traitement d'images dépendant de la valeur d'intensité du pixel coïncidant du masque numérique (**Mi**), afin de déceler la présence d'un défaut du récipient,
- mettre à jour le masque numérique **(Mi)** en :
* prenant en compte au moins une image (**Iᵢ**) de récipients **(2),**
* choisissant de modifier ou non le masque numérique (Mi) en fonction de ladite image (Iᵢ) la modification du masque consistant :
• à déterminer la position et l'orientation du motif visuel à inspecter dans la zone de traitement **(Zt)** des images,
• à appliquer à la zone de traitement **(Zt)** de l'image ou au masque numérique une transformation géométrique de manière à pouvoir placer numérique le masque numérique (**Mi**) et la zone de traitement **(Zt)** dans une position de coïncidence,
• à assurer la fusion d'au moins la zone de traitement **(Zt)** de l'image et du masque pour mettre à jour le masque numérique **(Mi).**

2. Procédé selon la revendication 1, **caractérisé en ce qu'**il consiste à réaliser le masque numérique dans une étape d'initialisation, à partir d'au moins une image d'un récipient.

3. Procédé selon les revendications 1 ou 2, **caractérisé en ce qu'**il consiste à appliquer à chaque pixel de la zone de traitement (**Zt**), un traitement d'images tel que chaque pixel de la zone de traitement **(Zt)** est comparé au pixel coïncidant du masque numérique.

4. Procédé selon l'une des revendications 1 à 3, **caractérisé en ce qu'**il consiste à analyser l'image afin de détecter des défauts dans le motif visuel.

5. Procédé selon les revendications 1 et 2, **caractérisé en ce qu'**il consiste à appliquer en tant que transformation géométrique, une translation et/ou une rotation.

6. Procédé selon les revendications 1 et 2, **caractérisé en ce qu'**il consiste à appliquer en tant que transformation géométrique, une anamorphose.

7. Procédé selon l'une des revendications 1 à 6, **caractérisé en ce qu'**il consiste à réaliser une étape de filtrage des images prises des récipients, préalablement à l'étape de traitement et à prendre en compte dans l'étape de mise à jour du masque, des images sur lesquelles est appliquée ladite étape de filtrage.

## Patentansprüche

1. Optisches Verfahren zum Inspizieren von Behältern (2) aus durchsichtigem oder durchscheinendem Werkstoff, die wenigstens ein visuelles Muster (3) umfassen, mit Hilfe eines Visionssystems (1), **dadurch gekennzeichnet, dass** es besteht aus:
- Beleuchten der Behälter (2), die nacheinander vor dem Visionssystem (1) vorbeilaufen,
- Herstellen mindestens eines Bilds (Iᵢ) jedes Behälters (2), der vor dem Visionssystem (1) vorbeiläuft, wobei jedes Bild eine bestimmte Anzahl von Pixeln mit jeweils einem Intensitätsniveau besitzt,
- Bestimmen in dem Bild jedes Behälters (2) mindestens einer Verarbeitungszone (Zt), die mindestens ein zu inspizierendes visuelles Muster umfasst, und mindestens einer Suchzone (Zr), in der mindestens ein visuelles Kennzeichnungsmuster (3) erscheint,
- Herstellen einer digitalen Maske (Mi) zumindest für die Verarbeitungszone (Zt) der Bilder,
- Bestimmen der Position und der Ausrichtung des visuellen Kennzeichnungsmusters (3) in der Suchzone (Zr) des Bilds des Behälters,
- Anwenden an die digitale Maske (Mi) oder an die Verarbeitungszone (Zt) einer geometrischen Transformation, die von der Position und der Ausrichtung des visuellen Kennzeichnungsmusters (3) abhängt, so dass bei dem Verarbeitungsschritt die Maske (Mi) und die Verarbeitungszone (Zt) in eine übereinstimmende Position platziert werden können,
- Anwenden einer Bildverarbeitung, die von dem Intensitätswert des übereinstimmenden Pixels der digitalen Maske (Mi) abhängt, auf jedes Pixel der Verarbeitungszone (Zt), um die Gegenwart eines Fehlers des Behälters aufzuzeigen,
- Aktualisieren der digitalen Maske (Mi) durch:
* Berücksichtigen mindestens eines Bilds (Ii) von Behältern (2),
* Auswählen des Änderns oder nicht der digitalen Maske (Mi) in Abhängigkeit von dem Bild (Iᵢ), wobei das Ändern der Maske aus Folgendem besteht:
• Bestimmen der Position und der Ausrichtung des zu inspizierenden visuellen Musters in der Verarbeitungszone (Zt) der Bilder,
• Anwenden an die Verarbeitungszone (Zt) des Bilds oder der digitalen Maske einer geometrischen Transformation derart, dass die digitale Maske (Mi) und die Verarbeitungszone (Zt) in eine übereinstimmende Position platziert werden können,
• Sicherstellen der Fusion mindestens der Verarbeitungszone (Zt) des Bilds und der Maske, um die digitale Maske (Mi) zu aktualisieren.

2. Verfahren nach Anspruch 1, **dadurch gekennzeichnet, dass** es darin besteht, die digitale Maske bei einem Initialisierungsschritt ausgehend von mindestens einem Bild eines Behälters herzustellen.

3. Verfahren nach Anspruch 1 oder 2, **dadurch gekennzeichnet, dass** es darin besteht, auf jedes Pixel der Verarbeitungszone (Zt) eine Bildverarbeitung derart anzuwenden, dass jedes Pixel der Bearbeitungszone (Zt) mit dem übereinstimmenden Pixel der digitalen Maske verglichen wird.

4. Verfahren nach einem der Ansprüche 1 bis 3, **dadurch gekennzeichnet, dass** es darin besteht, das Bild zu analysieren, um Fehler in dem visuellen Muster zu erfassen.

5. Verfahren nach den Ansprüchen 1 und 2, **dadurch gekennzeichnet, dass** es darin besteht, als geometrische Transformation eine Verschiebung und/oder eine Drehung anzuwenden.

6. Verfahren nach den Ansprüchen 1 und 2, **dadurch gekennzeichnet, dass** es darin besteht, als geometrische Transformation eine Anamorphose anzuwenden.

7. Verfahren nach einem der Ansprüche 1 bis 6, **dadurch gekennzeichnet, dass** es darin besteht, einen Filterschritt der aufgenommenen Bilder der Behälter vor dem Verarbeitungsschritt auszuführen und bei der Aktualisierung der Maske Bilder zu berücksichtigen, an welchen der Filterschritt angewandt wird.

## Claims

1. An optical method of using a vision system (1) to inspect containers (2) made of transparent or translucent material and including at least one visible pattern (3), the method being **characterized in that** it consists:
• in illuminating the containers (2) successively traveling past the vision system (1);
• in forming at least one image (Iᵢ) of each container (2) traveling past the vision system (1), each image possessing a determined number of pixels, each pixel having a respective intensity level;
• in determining, in the image of each container, at least one treatment zone (Zt) including at least one visible pattern for inspection, and at least one search zone (Zr) in which there appears at least one marker visible pattern (3);
• in preparing a digital mask (Mi) at least for the treatment zone (Zt) of the images;
• in determining the position and the orientation of the marker visible pattern (3) in said search zone (Zr) of the image of the container;
• in applying a geometrical transformation to the digital mask (Mi) or to the treatment zone (Zt), which transformation is a function of the position and the orientation of the marker visible pattern (3), so as to be capable during a treatment step of placing the mask (Mi) and the treatment zone (Zt) into a position in which they coincide;
• in applying image treatment to each pixel of the treatment zone (Zt), the treatment depending on the intensity value of the coincident pixel of the digital mask (Mi), in order to detect the presence of any defect in the container; and
• updating the digital mask (Mi) by:
• taking account of at least one image (Iᵢ) of the containers (2); and
• deciding whether or not to modify the digital mask (Mi) as a function of said image (Ii), the modification of the mask consisting:
• in determining the position and the orientation of the visible pattern for inspection in the treatment zone (Zt) of the images;
• in applying a geometrical transformation to the treatment zone (Zt) of the image or to the digital mask so as to be capable of placing the digital mask (Mi) and the treatment zone (Zt) in a position in which they coincide; and
• in melding at least the treatment zone (Zt) of the image and of the mask in order to update the digital mask (Mi).

2. A method according to claim 1, **characterized in that** it consists in preparing the digital mask in an initialization step, from at least one image of a container.

3. A method according to claims 1 or 2, **characterized in that** it consists in applying image treatment to each pixel of the treatment zone (Zt), in which treatment each pixel of the treatment zone (Zt) is compared with the coincident pixel of the digital mask.

4. A method according to any one of claims 1 to 3, **characterized in that** it consists in analyzing the image in order to detect defects in the visible pattern.

5. A method according to claims 1 and 2, **characterized in that** it consists in applying a shift in translation and/or a rotation as the geometrical transformation.

6. A method according to claims 1 and 2, **characterized in that** it consists in applying an anamorphosis as the geometrical transformation.

7. A method according to any one of claims 1 to 6, **characterized in that**, prior to the treatment step, it consists in performing a filtering step on the images taken of the containers, and in taking account of the images to which said filtering step has been applied in the step of updating the mask.
